# EUROPÄISCHE PATENTANMELDUNG

(11) **EP 4 851 539 A1**
(43) Veröffentlichungstag der Anmeldung: **09.12.2026**
(21) Anmeldenummer: 26178303.9
(22) Anmeldetag: 12.05.2026
(51) Int. Cl.: F24D 10/00, F24D 3/08, F24D 11/00, F24D 17/00, F24D 19/10

(54) **WARMWASSERBEREITUNGSANLAGE UND VERFAHREN ZUM BETREIBEN EINER WARMWASSERBEREITUNGSANLAGE**

(30) Priorität: 04.06.2025 DE 102025121880
(71) Anmelder: Richter Energy GmbH, 85737 Ismaning (DE)
(72) Erfinder: Richter, Matthias, 85737 Ismaning (DE)
(74) Vertreter: Prinz & Partner mbB

(57) **Zusammenfassung**

Eine Warmwasserbereitungsanlage wird vorgestellt, mit einem Heizwasserkreislauf (10) und einem Trinkwasserkreislauf (16), der einen Warmwasser-Zirkulationskreislauf (44), einen außerhalb des Warmwasser-Zirkulationskreislaufs (44) angeordneten und mit dem Warmwasser-Zirkulationskreislauf (44) gekoppelten Warmwasserspeicher (18) und eine vom Warmwasser-Zirkulationskreislauf (44) zum Warmwasserspeicher (18) führende Ablaufleitung (46) sowie eine vom Warmwasserspeicher (18) zum Warmwasser-Zirkulationskreislauf (44) führende Zulaufleitung (48) aufweist. Im Warmwasser-Zirkulationskreislauf (44) sitzt ein erster Wärmetauscher (24) und in der Zulaufleitung (48) ein zweiter Wärmetauscher (26). Diese können vom Heizwasserkreislauf (10) Wärmeenergie entnehmen. Im Heizwasserkreislauf (10) ist ein dritter Wärmetauscher (28) angeordnet und zwischen dem dritten und dem ersten Wärmetauscher (28, 24) sitzt ein Koppelungssystem (54) mit einer Vorlaufleitung (56) und einer Rücklaufleitung (58), über das Wärmeenergie vom dritten zum ersten Wärmetauscher (28, 24) und damit vom Heizwasserkreislauf (10) zum Trinkwasserkreislauf (16) gefördert wird, wobei ein Gebäudeheizungskreislauf (22) in Reihe mit dem ersten Wärmetauscher (24) schaltbar fluidisch einkoppelbar ist. Ferner wird ein Verfahren zum Betreiben einer Warmwasserbereitungsanlage vorgestellt.

## Beschreibung

Die Erfindung betrifft eine Warmwasserbereitungsanlage mit einem Heizwasserkreislauf, der an eine Wärmequelle, beispielsweise an ein Fernwärmesystem, anschließbar ist, und einem Trinkwasserkreislauf, wobei der Trinkwasserkreislauf einen Warmwasser-Zirkulationskreislauf, einen außerhalb des Warmwasser-Zirkulationskreislaufs angeordneten und mit dem Warmwasser-Zirkulationskreislauf strömungsmäßig gekoppelten Warmwasserspeicher und eine Wasser vom Warmwasser-Zirkulationskreislauf zum Warmwasserspeicher führende Ablaufleitung sowie eine Wasser vom Warmwasserspeicher zum Warmwasser-Zirkulationskreislauf führende Zulaufleitung aufweist, wobei im Warmwasser-Zirkulationskreislauf ein erster Wärmetauscher und in der Zulaufleitung ein zweiter Wärmetauscher sitzt und wobei der erste und der zweite Wärmetauscher vom Heizwasserkreislauf Wärmeenergie entnehmen können.

Ferner betrifft die Erfindung ein Verfahren zum Betreiben einer Warmwasserbereitungsanlage.

Die Erfindung bezieht sich insbesondere auf die Beheizung von Gebäuden, und zwar auf die Bereitstellung von warmem Trinkwasser und warmem Wasser zum Heizen des Gebäudes, wobei die Energie aus dem Fernwärmenetz entnommen wird. Unter dem Begriff "Fernwärmenetz" wird auch ein Nahwärmenetz verstanden, da diese Netze nicht exakt voneinander unterschieden werden können.

Um das Fernwärmenetz oder, allgemeiner, eine Wärmequelle effektiv zu betreiben, ist es erforderlich, dass dem aus der Wärmequelle (z. B. dem Fernwärmenetz) entkoppelten Fluid (üblicherweise Wasser oder Wasserdampf) so viel Energie wie möglich und möglichst gleichmäßig entnommen wird. Das bedeutet, das Fluid sollte möglichst gleichmäßig kühl wieder zurück zur Wärmequelle (in das Fernwärmenetz) eingespeist werden. Ein üblicherweise gebäudeseitig vorgesehener Warmwasserspeicher, der an den Trinkwasserkreislauf angekoppelt ist, ist jedoch temporär ausreichend warm, sodass bei wenig Abnahme von warmem Trinkwasser aus dem Trinkwasserkreislauf die entnommene Energie aus z. B. dem Fernwärmenetz gering ist und das Fluid ohne wesentlichen Temperaturverlust wieder in das Fernwärmenetz eingekoppelt wird.

Aufgabe der Erfindung ist es, eine Warmwasserbereitungsanlage zu konzipieren sowie ein Verfahren zum Betreiben einer Warmwasserbereitungsanlage zu schaffen, die die Energie der Wärmequelle, beispielsweise des Fernwärmenetzes, für eine Gebäudeenergieversorgung effektiv nutzen.

Diese Aufgabe wird bei einer Warmwasserbereitungsanlage nach dem Oberbegriff des Anspruchs 1 dadurch gelöst, dass im Heizwasserkreislauf ein dritter Wärmetauscher angeordnet ist und zwischen dem dritten Wärmetauscher und dem ersten Wärmetauscher ein Koppelungssystem mit einer Vorlaufleitung und einer Rücklaufleitung sitzt, über das Wärmeenergie vom dritten zum ersten Wärmetauscher und damit vom Heizwasserkreislauf zum Trinkwasserkreislauf gefördert wird, wobei ein Gebäudeheizungskreislauf in Reihe mit dem ersten Wärmetauscher schaltbar fluidisch einkoppelbar ist.

Die Erfindung nutzt ein Koppelungssystem, also ein Warmwasserkreislaufsystem, dazu, die Energie am dritten Wärmetauscher abzunehmen und zum ersten Wärmetauscher, also zum Trinkwasserkreislauf, weiterzuleiten. An das Koppelungssystem ist jedoch der Gebäudeheizungskreislauf energetisch angekoppelt, d. h., das Wasser im Koppelungssystem kann bei Zuschalten des Gebäudeheizkreislaufes in diesen Gebäudeheizungskreislauf strömen. Durch eine Reihenschaltung von erstem Wärmetauscher mit dem Gebäudeheizungskreislauf kann die entnommene Energie bedarfsoptimiert abgegeben werden. Dabei wird der Effekt genutzt, dass für den Trinkwasserkreislauf und den Gebäudeheizungskreislauf nicht gleichzeitig dasselbe Temperaturniveau für das ankommende, energieführende Wasser, welches die Energie zum Trinkwasserkreislauf und zum Gebäudeheizungskreislauf führt, erforderlich ist.

Dadurch, dass der Gebäudeheizungskreislauf in Reihe mit dem ersten Wärmetauscher fluidisch einkoppelbar ist, indem der Gebäudeheizungskreislauf zugeschaltet oder abgeschaltet werden kann, kann Wärme ohne den Gebäudeheizungskreislauf in den Trinkwasserkreislauf eingebracht werden oder auch in den Gebäudeheizungskreislauf. Wenn die Reihenschaltung geschaltet wird, ist folglich kein Pufferspeicher oder Wasserspeicher zwischen dem ersten Wärmetauscher und dem Gebäudeheizkreislauf vorgesehen (damit wäre auch keine Reihenschaltung mehr vorhanden), damit auch tatsächlich die Energie unmittelbar in den Gebäudeheizkreislauf strömen kann und das unterschiedliche Temperaturniveau unmittelbar genutzt wird.

Nachdem üblicherweise bei größeren Gebäuden die Heizungskosten einerseits nach dem Anschlusswert und andererseits nach der entnommenen Energiemenge bestimmt werden, kann durch die Erfindung der Anschlusswert reduziert werden, denn die dem Gebäude zugeführte Energiemenge wird zum größeren Maß entnommen als bei bisherigen Systemen. Mit anderen Worten: die Rücklauftemperatur wird gesenkt, so dass das Temperaturdelta zwischen Vorlauf und Rücklauf höher ist als bei bisherigen Systemen, was Kosten spart und gleichzeitig dem Energieversorger Vorteile verschafft.

Insbesondere ist der Gebäudeheizungskreislauf in Strömungsrichtung nach dem ersten Wärmetauscher positioniert, sodass das den ersten Wärmetauscher erreichende heiße Wasser wärmer ist als im nachfolgenden Gebäudeheizungskreislauf. Beispielsweise muss der Trinkwasserkreislauf temporär zur Verhinderung von Legionellenbildung auf mindestens 60 °C aufgeheizt werden, wogegen gerade bei Gebäuden mit Fußbodenheizung oder Wandheizung das Heißwasser auch unter 45° C warm sein kann. Im Ergebnis werden Trinkwasserkreislauf und Gebäudeheizungskreislauf somit in einem für sie jeweils optimalen Temperaturniveau mit Energie zuführendem Wasser bedient, und gleichzeitig kann die Temperatur des dem dritten Wärmetauscher zurückgeführten Wassers im Koppelungssystem unter 35° C, gegebenenfalls sogar unter 30° C betragen und ist damit für eine hohe Energieaufnahme bereit.

Der Gebäudeheizungskreislauf ist insbesondere in die Rücklaufleitung eingebunden und Teil derselben, d. h., wenn der Gebäudeheizungskreislauf zugeschaltet ist, strömt das Wasser nach dem ersten Wärmetauscher erst in den Gebäudeheizungskreislauf, sodass bereits abgekühltes Wasser für die Gebäudeheizung zur Verfügung steht.

Es kann eine Bypassleitung für den Gebäudeheizungskreislauf vorgesehen sein, die zumindest bei Drosselung des Gebäudeheizungskreislaufs durchströmt wird und die Rücklaufleitung abschnittsweise bildet oder mit bildet. Über die Bypassleitung kann heißes Wasser, das nicht für die Gebäudeheizung benötigt wird (wenn weniger Wärmebedarf da ist), an der Gebäudeheizung vorbeiströmen, hin zu dem dritten Wärmetauscher. Damit kann der Gebäudeheizungskreislauf wahlweise entkoppelt werden. Es ist auch möglich, dass die Bypassleitung permanent zumindest teilweise durchströmt wird, sodass optional ein Teil des noch heißen Wassers in den Gebäudeheizungskreislauf strömt und ein anderer Teil daran vorbei in Richtung zum dritten Wärmetauscher.

Ein Rückschlagventil in der Bypassleitung sorgt dafür, dass eine Strömungsrichtung vorgegeben ist, nämlich in Richtung zur Kaltseite des dritten Wärmetauschers. Das Rückschlagventil ist nämlich entgegen der Strömungsrichtung von Wasser vom warmen zum kalten Abschnitt des dritten Wärmetauschers geschlossen, d. h. in Richtung zur Warmseite des dritten Wärmetauschers.

Die Warmwasserbereitungsanlage ist mit einer Steuerung versehen, sodass die einzelnen Ventile und Pumpen separat ansteuerbar sind. Damit kann die Temperatur in den einzelnen Kreisen und Wärmetauschern gesteuert bzw. geregelt werden. Wenn nachfolgend von "Steuern" gesprochen wird, so umfasst dies sowohl ein Steuern als auch ein Regeln.

Eine Variante sieht vor, dass im Gebäudeheizungskreislauf, in der Vorlaufleitung oder der Rücklaufleitung, im Koppelungssystems und im Trinkwasserkreislauf jeweils eine eigene Pumpe, insbesondere eine elektronisch steuerbare oder regelbare Pumpe vorgesehen ist, über die optional auch der Massenstrom einstellbar ist.

Ein Ventil im Gebäudeheizungskreislauf kann mit einer Steuerung koppelbar sein, wobei das Ventil die Energiemenge durch den Gebäudeheizungskreislauf steuert und/oder wahlweise die Energiezufuhr auch vollständig unterbindet. Über dieses Ventil ist der Gebäudeheizungskreislauf abkoppelbar vom Rest des Koppelungssystems.

Dieses Ventil ist insbesondere ein Mischventil, welches einen Auslass hat, der zu Heizkörpern führt, einen ersten Zulauf, welcher vom dritten Wärmetauscher ankommendes Wasser aufnimmt, und einen zweiten Zulauf, welcher vom Rücklauf des Gebäudeheizungskreislaufs Wasser aufnimmt. Über den zweiten Zulauf lässt sich Wasser im Gebäudeheizungskreislauf zirkulieren. Zu diesem zirkulierenden Wasser, welches eventuell noch genügend Restenergie hat, um zur Heizung des Gebäudes beizutragen, kann heißes Wasser vom dritten Wärmetauscher zugemischt werden. Auf diese Weise wird die Wassertemperatur im Gebäudeheizungskreislauf gesteuert oder geregelt. Auch lässt sich damit der Energiestrom im Gebäudeheizungskreislauf einstellen.

Zwischen der Vorlaufleitung und der Rücklaufleitung kann eine Kurzschlussleitung vorgesehen sein, über die Wasser zum Gebäudeheizungskreislauf strömen kann, ohne den ersten Wärmetauscher zu erreichen. Besteht ein hoher Heizbedarf im Gebäudeheizungskreislauf, sodass das vom ersten Wärmetauscher zurückfließende Wasser nicht ausreichen würde, diesen Heizungsbedarf zu erfüllen, kann das gesamte Wasser oder ein Teil des zum ersten Wärmetauscher eigentlich strömenden Wassers unmittelbar zum Gebäudeheizungskreislauf geführt werden. Dasselbe gilt für den Fall, dass kein Heizungsbedarf mehr oder nur ein geringer Heizungsbedarf im Trinkwasserkreislauf besteht.

Ein Rückschlagventil in der Kurzschlussleitung ist entgegen der Strömungsrichtung von Wasser vom warmen zum kalten Abschnitt des Wärmetauschers geschlossen und verhindert damit ein Rückströmen von kälterem Wasser zum dritten Wärmetauscher über die Vorlaufleitung.

Ein optional vorgesehenes, mit einer Steuerung gekoppeltes Ventil in der Vorlaufleitung steuert die durch die Vorlaufleitung geführte Energiemenge und/oder unterbindet wahlweise die Energiezufuhr sogar vollständig. Über dieses Ventil lassen sich somit die Energiezufuhr zum ersten Wärmetauscher und die in der Kurzschlussleitung geführte Energiemenge steuern.

Dieses Ventil ist zum Beispiel ein Mischventil, welches einen Auslass hat, der zum ersten Wärmetauscher führt, einen ersten Zulauf, welcher vom dritten Wärmetauscher ankommendes Wasser aufnimmt, und einen zweiten Zulauf, welcher unmittelbar mit der Rücklaufleitung gekoppelt ist. Über diesen zweiten Zulauf kann vom ersten Wärmetauscher kommendes, kühleres Wasser in einem Kurzschlusskreislauf strömen und dem warmen, vom dritten Wärmetauscher kommenden Wasser in beliebiger Menge zugemischt werden, um die Wassertemperatur des am ersten Wärmetauscher ankommenden Wassers zu steuern bzw. zu regeln.

Es kann eine über ein Ventil zuschaltbare Überbrückungsleitung Wasser am zweiten Wärmetauscher vorbeiführen, insbesondere wobei das Ventil ein Mischventil ist, mittels dessen der durch den zweiten Wärmetauscher und die Überbrückungsleitung geführte Wasserdurchfluss steuerbar ist. Diese Überbrückungsleitung ist dann wichtig, wenn das Wasser im zweiten Wärmetauscher, das im Trinkwasserkreislauf in ihn einströmt, wärmer ist als das Wasser, welches auf der anderen Seite (Heizseite) in den zweiten Wärmetauscher einströmt. Die andere Seite ist diejenige, die normalerweise die Wärme aus der Wärmequelle in den Wärmetauscher einbringt, weshalb sie Heizseite genannt wird. Somit wird verhindert, dass Energie aus dem Trinkwasserkreislauf zurück in Richtung zur Energiequelle befördert wird. Über ein Mischventil lässt sich die Temperatur des Wassers, welches stromabwärts des zweiten Wärmetauschers und der Überbrückungsleitung auf der Heizseite weiterströmt, steuern.

Eine besonders einfach aufgebaute Warmwasserbereitungsanlage kann dadurch geschaffen werden, dass die Überbrückungsleitung Teil der Rücklaufleitung stromabwärts des Gebäudeheizungskreislaufs ist, die zu dem dritten Wärmetauscher führt, wobei ein zur Überbrückungsleitung paralleler Strang der Rücklaufleitung durch den zweiten Wärmetauscher führt. Hier sind insgesamt nur drei Wärmetauscher notwendig. Diese drei Wärmetauscher können nacheinander durchströmt werden. D. h., der erste Wärmetauscher erhält Energie vom dritten Wärmetauscher, danach strömt Wasser optional durch den Gebäudeheizungskreislauf und/oder an ihm vorbei, um dann schließlich zum zweiten Wärmetauscher zu gelangen und/oder an ihm vorbei zu strömen, bevor das Wasser in Richtung zurück zum dritten Wärmetauscher gelangt. Auf der Seite des Heizungskreislaufs ist damit kein Umbau des Systems notwendig, was insbesondere bei großen Anlagen in Mehrfamilienhäusern oder Bürogebäuden wichtig ist. Beispielsweise ist es bei Fernwärmesystemen notwendig, dass Umbauten im Heizwasserkreislauf, dazu gehört zum Beispiel der Einbau eines weiteren Wärmetausches, mit dem Versorger abgestimmt sind oder dass diese Umbauten durch den Versorger selbst erfolgen müssen, was mit erhöhten Kosten- und Verwaltungsaufwand sowie Zeitverlust verbunden ist. Die erfindungsgemäße Warmwasserbereitungsanlage ist damit insbesondere bei energetischen Renovierungen vorteilhaft.

Wenn in die Rücklaufleitung stromabwärts der Überbrückungsleitung und des zweiten Wärmetausches ein Pufferspeicher eingebettet ist, lässt sich die Rücklauftemperaturen am dritten Wärmetauscher vergleichmäßigen, was insbesondere vorteilhaft für den Versorger ist. Beispielsweise muss der Warmwasserspeicher einmal täglich auf mindestens 60° aufgeheizt werden, d. h. durchgeheizt werden, was mit einem kurzzeitigen hohen Energiestoß verbunden ist. Das durch den kalten Teil des Warmwasserspeicher abgeführte, bei diesem Vorgang dann aber heiße Wasser, würde ohne den Pufferspeicher zurück in Richtung zum Heizwasserkreislauf gelangen. Der Pufferspeicher kann diese Energie aufnehmen.

Die Warmwasserbereitungsanlage kann ferner dadurch optimiert werden, dass ein vierter Wärmetauscher vorgesehen ist, welcher in den Heizwasserkreislauf stromabwärts des dritten Wärmetauschers eingekoppelt ist, wobei ein Zusatzkreislauf den zweiten und den vierten Wärmetauscher miteinander thermisch koppelt.

Dieser Zusatzkreislauf ist insbesondere fluidisch von den Leitungen, die den ersten und den dritten Wärmetauscher koppeln, getrennt, was zusätzliche Optionen bezüglich der Wärmeführung bringt.

Der Zusatzkreislauf kann ein Pufferspeicherkreislauf mit einem darin eingebetteten Pufferspeicher sein, der, wie gesagt, für eine "Glättung" der Rücklauftemperatur im Heizwasserkreislauf erreicht wird. Energie aus dem Pufferspeicher kann beispielsweise auch für den zweiten Wärmetauscher vorgesehen sein oder anderweitig genutzt werden.

Eine über ein Ventil zuschaltbare Überbrückungsleitung ist Teil des Pufferspeicherkreislaufs. Durch diese Überbrückungsleitung kann Wasser am zweiten Wärmetauscher vorbeigeführt werden, wenn dieser keine Wärme benötigt oder, wie zuvor bereits erläutert, energetisch abgekoppelt werden soll. Dieses Ventil kann ebenfalls ein Mischventil sein, mittels dessen der durch den zweiten Wärmetauscher und die Überbrückungsleitung geführte Wasserdurchfluss steuerbar ist. Das Ventil kann also nicht nur zwischen der Überbrückungsleitung und dem zweiten Wärmetauscher hin und her schalten, sondern kann auch die Energieströme verändern, beispielsweise um die Temperatur im zweiten Wärmetauscher zu steuern. Benötigt man nämlich am zweiten Wärmetauscher weniger Energie, kann diese Energie gleich zum Pufferspeicher geleitet werden.

Um den gesamten Massenstrom zu verändern, ist vorzugsweise im Zusatzkreislauf eine individuell steuerbare Pumpe vorgesehen.

Im Hinblick darauf, dass die Temperatur im Rücklauf des Heizwasserkreislaufs möglichst gering sein sollte, kann die Warmwasserbereitungsanlage über die Steuerung so gesteuert bzw. geregelt werden, dass dieses Ziel möglichst oft und lange erreicht wird. Hierzu ist ein Temperatursensor vorgesehen, zur Bestimmung der Rücklauftemperatur des Heizwasserkreislaufs. Die Steuerung ist mit dem Temperatursensor gekoppelt und so programmiert, dass die Energiemenge in der Zulaufleitung in Abhängigkeit von der ermittelten Rücklauftemperatur gesteuert wird. Wenn ein Pufferspeicherkreislauf vorgesehen ist, so kann auch die in diesem Zusatzkreislauf geschrieben strömende Energiemenge in Abhängigkeit von der ermittelten Rücklauftemperatur gesteuert werden.

Der Temperatursensor kann beispielsweise tatsächlich unmittelbar nach dem vierten Wärmetauscher, allgemeiner ausgedrückt, im Rücklauf des Heizwasserkreislaufs vorgesehen sein oder auch beispielsweise im Pufferspeicherkreislauf. Über die Temperatur im Pufferspeicherkreislauf lässt sich die Temperatur im Rücklauf des Heizwasserkreislaufs auch ermitteln.

Die oben genannte Aufgabe wird auch gelöst durch ein Verfahren zum Betreiben einer Warmwasserbereitungsanlage mit einem Heizwasserkreislauf, der an eine Wärmequelle, insbesondere ein Fernwärmesystem, anschließbar ist, und einem Trinkwasserkreislauf, wobei der Trinkwasserkreislauf einen Warmwasser-Zirkulationskreislauf, einen außerhalb des Warmwasser-Zirkulationskreislauf angeordneten und mit dem Warmwasser-Zirkulationskreislauf strömungsmäßig gekoppelten Warmwasserspeicher und eine Wasser vom Warmwasser-Zirkulationskreislauf zum Warmwasserspeicher führende Ablaufleitung sowie eine Wasser vom Warmwasserspeicher zum Warmwasser-Zirkulationskreislauf führende Zulaufleitung aufweist, wobei im Warmwasser-Zirkulationskreislauf ein erster Wärmetauscher und in der Ablaufleitung ein zweiter Wärmetauscher sitzt, wobei der erste und der zweite Wärmetauscher vom Heizwasserkreislauf Wärmeenergie entnehmen können, wobei im Heizwasserkreislauf ein dritter Wärmetauscher angeordnet ist und zwischen dem dritten Wärmetauscher und dem ersten Wärmetauscher ein Koppelungssystem mit einer Vorlaufleitung und einer Rücklaufleitung sitzt, und mit einem Gebäudeheizungskreislauf, der in die Warmwasserbereitungsanlage eingebunden ist, gekennzeichnet durch folgende Schritte:
Wärme aus dem Heizwasserkreislauf wird am dritten Wärmetauscher in das Kopplungssystem eingebracht und von dem Kopplungssystem am ersten Wärmetauscher in den Trinkwasserkreislauf eingebracht, und
bei Heizungsbedarf wird der Gebäudeheizungskreislauf zugeschaltet und ist dann in Reihe mit dem ersten Wärmetauscher geschaltet.

Der Gebäudeheizungskreislauf kann bei Bedarf zugeschaltet werden und ist dann Teil des Koppelungssystems eingebettet, der Gebäudeheizungskreislauf ist nicht parallel zu der Strömung geschaltet, die den ersten Wärmetauscher erreicht.

Bei Bedarf wird Wasser aus dem Warmwasserspeicher in den Warmwasser-Zirkulationskreislauf und Wasser vom Warmwasser-Zirkulationskreislauf zum Warmwasserspeicher gefördert,
Durch diese "Sortierung" der Rücklauftemperaturen kann die Rücklauftemperatur im Heizwasserkreislauf stark gesenkt und vergleichmäßigt werden.

Abhängig vom Heizungsbedarf und/oder vom Energiebedarf im Trinkwasserkreislauf kann die Energiemenge zum ersten Wärmetauscher im Kopplungssystem und zum Gebäudeheizungskreislauf verändert werden, wobei das Verfahren auch ein optionales Absperren des Durchflusses durch den ersten Wärmetauscher umfasst, falls dies vorteilhaft ist.

Abhängig von der im Gebäudeheizungskreislauf erforderlichen Energiemenge kann die Energiemenge durch den ersten Wärmetauscher gesteuert oder geregelt werden und gegebenenfalls das Verhältnis der durch den ersten Wärmetauscher strömenden Energiemenge zu der Energiemenge des am ersten Wärmetauscher vorbei unmittelbar in den Gebäudeheizungskreislauf führenden Wassers verändert werden.

Vorzugsweise hat bei der Steuerung die Trinkwassererwärmung automatisch Vorrang. Damit kann es bei hohem Energiebedarf während der Trinkwassererwärmung vorkommen, dass keine oder wenig Energie für den Gebäudeheizkreislauf zur Verfügung steht. Dies ist jedoch unproblematisch. Der Gebäudeheizungskreislauf ist nämlich ein träges System, sodass eine Reduzierung der zugeführten Energie oder ein Stoppen von Energiezufuhr für eine kurze Zeit unbeachtlich ist. In dieser Zeit kann jedoch das Trinkwasser auf die erforderliche Temperatur gebracht werden. Ist umgekehrt die Trinkwassertemperatur ausreichend, kann die meiste Energie oder die gesamte Energie in den Gebäudeheizungskreislauf gefördert werden. Beliebige Zwischenstufen sind dabei möglich. Im Sommerbetrieb, wenn kein Heizungsbedarf vorhanden ist, kann dann beispielsweise keine Energie in den Gebäudeheizungskreislauf gefördert werden.

Das Verfahren sieht gemäß einer Variante vor, dass der Wärmefluss vom dritten Wärmetauscher zuerst zum ersten Wärmetauscher erfolgt und, bei Energiebedarf im Gebäudeheizungskreislauf, anschließend zum Gebäudeheizungskreislauf und schließlich zurück zum dritten Wärmetauscher. Damit soll erreicht werden, dass das Wasser im Kopplungssystem in heißerem Zustand zum ersten Wärmetauscher gelangt und in einem kühleren Zustand dann zum Gebäudeheizungskreislauf, wo geringere Temperaturen des Wassers zur Erfüllung des Heizbedarfs ausreichend sind.

Um die Rücklauftemperatur des Heizwasserkreislaufs zusätzlich zu reduzieren, d. h. zum zusätzlichen Abkühlen des Wassers im Rücklauf des Heizwasserkreislaufs, kann kaltes Wasser aus dem Warmwasserspeicher oder kaltes Frischwasser über die Zulaufleitung dem zweiten Wärmetauscher zugeführt werden. Dieses zusätzliche Abkühlen kann abhängig von der Rücklauftemperatur des Heizwasserkreislaufs gesteuert oder geregelt werden.

Zum selben Zweck kann ein Zusatzkreislauf mit einem darin integrierten vierten Wärmetauscher zugeschaltet werden, wobei der vierte Wärmetauscher stromabwärts des dritten Wärmetauschers im Heizwasserkreislauf sitzt. Damit kann Wärme vom vierten Wärmetauscher zum zweiten Wärmetauscher und stromabwärts des zweiten Wärmetauschers geführt werden. optional kann ein Pufferspeicher in den Zusatzkreislauf integriert sein, der überschüssige Wärme aufnehmen und das Temperaturniveau im Rücklauf vergleichmäßigen kann.

Wenn der Wasserdurchfluss, der im Zusatzkreislauf zum zweiten Wärmetauscher strömt, variabel gesteuert oder geregelt wird, lässt sich die dem Heizwasserkreislauf entnommene Wärmemenge optimal steuern. Zudem kann situationsabhängig das Wasser an dem zweiten Wärmetauscher vorbei geleitet werden.

Alternativ zur Lösung mit dem Zusatzkreislauf kann durch den ersten Wärmetauscher und den Gebäudeheizungskreislauf abgekühltes Wasser anschließend durch den zweiten Wärmetauscher und/oder parallel zum zweiten Wärmetauscher zum dritten Wärmetauscher geführt werden, wobei hier insgesamt nur drei Wärmetauscher nötig sein können. Zumindest ein Teil des Wassers kann durch vorsehen eines steuerbaren Ventils, zum Beispiel eines Mischventils, in eine Überbrückungsleitung geleitet werden, um den zweiten Wärmetauscher zu umgehen. Zusätzlich kann ein Pufferspeicher stromabwärts des zweiten Wärmetauschers in die Rücklaufleitung eingebettet sein.

Weitere Merkmale und Vorteile der Erfindung ergeben sich aus der nachfolgenden Beschreibung und aus den nachfolgenden Figuren, auf die Bezug genommen wird. In den Figuren zeigen:
Figur 1, eine Option einer erfindungsgemäßen Warmwasserbereitungsanlage zeigt, die mit dem erfindungsgemäßen Verfahren betrieben werden kann, und
Figur 2 eine weitere Option einer erfindungsgemäßen Warmwasserbereitungsanlage, die mit dem erfindungsmäßen Verfahren betrieben werden kann.

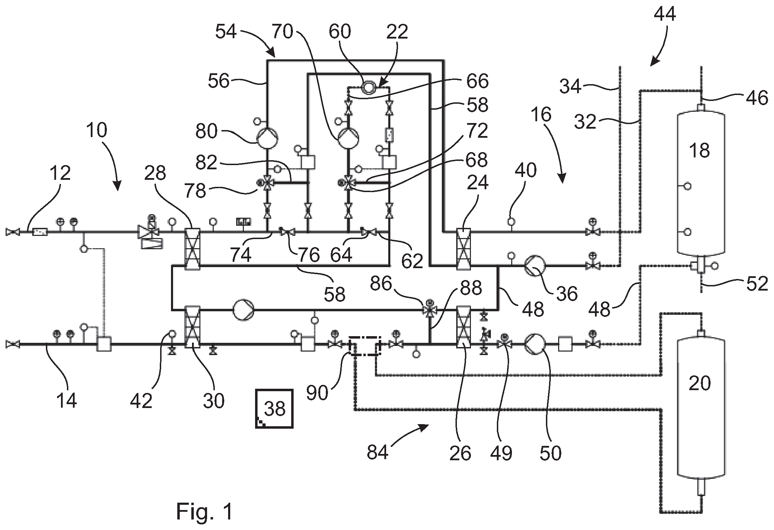

In Figur 1 ist eine Warmwasserbereitungsanlage beispielsweise für ein Mehrfamilienhaus symbolisch dargestellt. Ein Heizwasserkreislauf 10 speist sich beispielsweise aus einem Fernwärmenetz und ist somit Teil des Fernwärmenetzes und hat einen Zulauf 12 sowie einen Rücklauf 14. Alternativ ist eine zentrale Wärmequelle (zum Beispiel Wärmepumpe, Pelletheizung, Gas- oder Ölheizung) vorhanden, deren Energie über den Heizwasserkreislauf 10 eingebracht wird.

Mit dem Heizwasserkreislauf 10 werden ein Trinkwasserkreislauf 16, ein Warmwasserspeicher 18, ein Pufferspeicher 20 und ein Gebäudeheizungskreislauf 22 beheizt.

Die Energieübertragung erfolgt hierbei über einen ersten Wärmetauscher 24, einen zweiten Wärmetauscher 26, einen dritten Wärmetauscher 28 und einen vierten Wärmetauscher 30.

Der erste Wärmetauscher 24 ist in den Trinkwasserkreislauf eingebettet, der einen Vorlauf 32 und einen Rücklauf 34 aufweist. Die entsprechenden Leitungen enden zwar in Figur 1 frei, allerdings deshalb, weil sich die Leitungen später im Gebäude aufteilen und zu Abnahmestellen führen und von dort zurück zum ersten Wärmetauscher 24.

Warmwasser zirkuliert folglich im Trinkwasserkreislauf 16, wird über den ersten Wärmetauscher 24 auf eine vorbestimmte Temperatur geregelt und mittels einer gesteuerten, eigenen Pumpe 36 mit einem vorgegebenen Wasserdurchfluss durch den Trinkwasserkreislauf 16 gepumpt.

Sämtliche Pumpen und Ventile werden durch eine oder mehrere Steuerungen 38 gesteuert oder geregelt, um die gewünschten Temperaturen und Wasserdurchflüsse in den jeweiligen Leitungen zu erreichen. Entsprechend sind in allen oder fast allen Leitungen Temperatursensoren 40 vorgesehen, wobei hier zur Vereinfachung und zur Erhöhung der Übersichtlichkeit nur einer der zahlreichen Temperatursensoren 40 mit Bezugszeichen versehen ist.

Ein spezieller, noch separat erläuterter Sensor ist der Temperatursensor 42 unmittelbar nach dem vierten Wärmetauscher 30, über den die Temperatur des in das Fernwärmesystem zurückfließenden Wassers gemessen wird.

Der Trinkwasserkreislauf 16 umfasst einen Warmwasser-Zirkulationskreislauf 44, welcher den Vorlauf 32 und dem Rücklauf 34 sowie den ersten Wärmetauscher 24 umfasst.

Darüber hinaus umfasst der Trinkwasserkreislauf 16 den außerhalb des Warmwasser-Zirkulationskreislaufs 44 sitzenden Warmwasserspeicher 18, der über eine Ablaufleitung 46 vom Warmwasser-Zirkulationskreislauf 44, genauer gesagt vom Vorlauf 32 gespeist werden kann. Die Ablaufleitung 46 mündet in einem oberen oder obersten Bereich des Warmwasserspeichers 18.

Eine Zulaufleitung 48 führt von einem unteren oder untersten Bereich des Warmwasserspeichers 18 zum zweiten Wärmetauscher 26 und dann weiter zum Rücklauf 34, in den sie mündet.

In der Zulaufleitung 48 ist eine weitere gesteuerte oder geregelte Pumpe 50 vorgesehen. Darüber hinaus sind auch noch Ventile vorgesehen, auf die im Einzelnen nicht eingegangen wird, die allerdings in der Figur dargestellt sind. Diese Ventile sind insbesondere Absperrventile, die manuell betätigt werden können und es erlauben, zwischen sich positionierte Verschleißteile einfach auszuwechseln. Darüber hinaus ist aber auch ein steuerbares oder regelbares Ventil 49 in der Zulaufleitung vorgesehen, über die der Volumenstrom des kalten Frischwassers oder kälteren Wassers aus dem Warmwasserspeicher 18 abhängig von der Temperatur, die durch den Sensor 42 erfasst wird, gesteuert bzw. geregelt wird.49

Ist im Warmwasser-Zirkulationskreislauf 44 zu wenig Wasser enthalten, weil Wasser von Zapfstellen abgenommen wurde, strömt Frischwasser über einen Frischwasseranschluss 52 in den Trinkwasserkreislauf 16 nach, hier entweder direkt in die Zulaufleitung 48 oder in einen unteren Bereich des Warmwasserspeichers 18.

Die Energie, die dem ersten Wärmetauscher 24 zugeführt wird, wurde zuvor über den dritten Wärmetauscher 28 dem Heizwasserkreislauf 10 entnommen. Die Wärmetauscher 24 und 28 sind über ein Kopplungssystem 54 mit Warmwasser führenden Leitungen energetisch gekoppelt. Das Kopplungssystem 54 umfasst unter anderem eine Vorlaufleitung 56, die vom dritten Wärmetauscher 28 zum ersten Wärmetauscher 24 führt, sowie eine Rücklaufleitung 58 vom ersten Wärmetauscher 24 zum dritten Wärmetauscher 28.

In die Rücklaufleitung 58 ist der Gebäudeheizungskreislauf 22 eingebettet. Mit dem Bezugszeichen 60 sind symbolisch Heizkörper (worunter jegliche Art von Wärme abgebenden Systemen fällt) dargestellt. Es können optional auch in Reihe oder parallel zum dargestellten Gebäudeheizungskreislauf 22 mehrere weitere Gebäudeheizungskreisläufe in das Kopplungssystem 54 eingekoppelt sein.

Der Gebäudeheizungskreislauf 22 ist in Reihe zum Rest des Kopplungssystems 54 geschaltet, d. h. in Reihe zum ersten Wärmetauscher 24 und stromabwärts desselben.

Der Gebäudeheizungskreislauf 22 ist zuschaltbar oder abschaltbar oder teilweise zuschaltbar, denn eine Bypassleitung 62 mit einem Rückschlagventil 64 erlaubt es, das heiße Wasser oder einen Teil des heißen Wassers nicht in den Gebäudeheizungskreislauf 22, sondern an ihm vorbeiströmen zu lassen.

Das Rückschlagventil 64 schließt im Übrigen entgegen der Strömungsrichtung von Wasser vom warmen zum kalten Abschnitt des dritten Wärmetauschers. Die Schließrichtung sorgt dafür, dass Wasser nur, bezogen auf Figur 1, von links nach rechts durch die Bypassleitung 62 strömen kann.

In einer Zuleitung 66 des Gebäudeheizungskreislaufs 22 sitzen ein Mischventil 68 sowie eine von der Steuerung 38 separat steuerbare oder regelbare Pumpe 70.

Das Mischventil 68 hat einen Auslass (nach oben), der zu den Heizkörpern 60 führt, einen ersten Zulauf (von unten) welcher vom dritten Wärmetauscher 28 ankommendes Wasser aufnimmt, und einen zweiten Zulauf (von rechts), welcher vom Rücklauf des Gebäudeheizungskreislaufs 22 Wasser aufnimmt und über eine Verbindungsleitung 72 vom Rücklauf des Gebäudeheizungskreislaufs 22 gespeist wird.

Mit diesem Mischventil 68 kann die Gesamtströmung durch den Gebäudeheizungskreislauf 22 gesteuert oder auch wahlweise vollständig unterbunden werden, wobei zum Unterbinden der Strömung auch andere Schaltventile vorgesehen sein können.

Zwischen der Vorlaufleitung 56 und der Rücklaufleitung 58 ist eine Kurzschlussleitung 74 mit einem dort integrierten Rückschlagventil 76 vorgesehen, über die Wasser zum Gebäudeheizungskreislauf 22 strömen kann, ohne den ersten Wärmetauscher 24 zu erreichen. Auch hier ist das Rückschlagventil 76 so ausgeführt, dass es in Strömungsrichtung von Wasser vom warmen zum kalten Abschnitt des dritten Wärmetauschers offen und in Gegenrichtung geschlossen ist, d. h., bezogen auf Figur 1, von links nach rechts offen ist.

In der Vorlaufleitung 56 sitzen stromabwärts der Abzweigung zur Kurzschlussleitung 74 ein Mischventil 78 und eine über die Steuerung 38 ansteuerbare oder regelbare Pumpe 80.

Das Mischventil 78 hat einen Auslass (nach oben) welcher zum ersten Wärmetauscher 24 führt, einen ersten Zulauf (von unten), welcher vom dritten Wärmetauscher 28 ankommendes Wasser aufnimmt, und einen zweiten Zulauf (von rechts), welcher unmittelbar mit der Rücklaufleitung über eine Verbindungsleitung 82 gespeist wird.

Die Wärmeübertragung vom vierten Wärmetauscher 30 zum zweiten Wärmetauscher 28 erfolgt über einen diese beiden Wärmetauscher koppelnden Zusatzkreislauf, der optional als Pufferspeicherkreislauf 84 ausgeführt sein kann, in den der Pufferspeicher 20 integriert ist.

Der Pufferspeicher 20 ist bei dieser Ausgestaltung stets durchströmt, er kann aber optional auch über eine Leitung, die wahlweise zuschaltbar ist, vom Pufferspeicherkreislauf 84 abgekoppelt sein.

Eine über ein Ventil 86 zuschaltbare Überbrückungsleitung 88 ist Teil des Pufferspeicherkreislaufs 84. Über diese Überbrückungsleitung 88 kann Wasser am zweiten Wärmetauscher 26 vorbeigeführt werden. Das Ventil 86 ist beispielsweise ein Mischventil, mittels dessen der durch den zweiten Wärmetauscher 26 und die Überbrückungsleitung 88 geführte Wasserdurchfluss steuerbar ist.

Der Pufferspeicher 20 muss jedoch nicht vorgesehen sein. Alternativ hierzu ist der Zusatzkreislauf ohne den Pufferspeicher 20 ausgeführt, sodass die beiden zum und weg vom Pufferspeicher 20 führten Leitungsabschnitte in dem mit einem Rechteck 90 umrahmten Bereich direkt miteinander verbunden sein können.

Nachfolgend wird ein Verfahren zum Betreiben der dargestellten Warmwasserbereitungsanlage erläutert.

Das Wasser im Warmwasser-Zirkulationskreislauf 44 ist stets auf eine vorbestimmte Mindesttemperatur zu bringen, weshalb die Steuerung 38 primär für die Erreichung dieses Temperaturziels den Wärmestrom zu dem Warmwasser-Zirkulationskreislauf 44 richtet. Hierzu wird über den dritten Wärmetauscher 28 und die Vorlaufleitung 56 das warme Wasser zum ersten Wärmetauscher 24 gefördert.

Das Mischventil 78 hat dann den zweiten Zulauf geschlossen.

Das Mischventil 68 oder ein eigenes Abschaltventil kann hier so geschaltet sein, dass keine Strömung zu den Heizkörpern 60 vorhanden ist, sodass der Gebäudeheizungskreislauf 22 abgekoppelt ist.

Im Sommerbetrieb bleibt beispielsweise der Gebäudeheizungskreislauf 22 permanent abgekoppelt, sodass das Warmwasser permanent über die Bypassleitung 62, am Gebäudeheizungskreislauf 22 vorbei, zum dritten Wärmetauscher 28 strömt.

Ist im Gebäude ein Bedarf zum Erwärmen der Räume vorhanden, wird das Mischventil 68 oder das eigene Abschaltventil geöffnet, und die Pumpe 70 wird gestartet und abhängig vom notwendigen Massenstrom entsprechend hochgefahren. Somit wird das auf 50-60 °C abgekühlte Wasser zu den Heizkörpern 60 geleitet, um dann mit vorzugsweise unter 40 °C den dritten Wärmetauscher 28 zu erreichen.

Ist der Warmwasser-Zirkulationskreislauf 44 ausreichend auf Temperatur gebracht, kann auch das Mischventil 78 zumindest teilweise geschlossen werden, sodass der Massenstrom in der Vorlaufleitung 56 dem Wärmebedarf im Warmwasser-Zirkulationskreislauf 44 angepasst wird. Dabei ist es auch möglich, den Zulauf über die Vorlaufleitung 56 komplett zu schließen.

Ferner ist es möglich, den zweiten Zulauf des Mischventils 78 teilweise oder ganz zu öffnen und den ersten Zulauf teilweise oder ganz zu schließen, sodass vom ersten Wärmetauscher 24 in der Verbindungsleitung 82 zurückströmendes, kälteres Wasser dem ankommenden heißen Wasser im Mischventil 78 zugemischt werden kann, oder sodass sogar bei ausreichend warmem Wasser der erste Zulauf geschlossen werden kann, sodass das noch ausreichend warme Wasser über die Verbindungsleitung 82 im Kreis strömt.

Ist das Mischventil 78 oder ein eigenes Abschaltventil geschlossen, strömt das gesamte warme Wasser über die Kurzschlussleitung 74 zum Gebäudeheizungskreislauf 22. Die zahlreichen Temperatursensoren ermöglichen es der Steuerung 38, die gewünschten Energiemengen jedem System zur Verfügung zu stellen. Üblicherweise ist die Warmwasserbereitungsanlage so ausgeführt, dass auch stets genügend Energie für den Heizwasserkreislauf zur Verfügung steht. Das bedeutet, dass stets auch eine gewisse, wenn auch in bestimmten Fällen geringe Energiemenge über die Kurzschlussleitung 74 direkt zum Gebäudeheizungskreislaufs 22 strömen kann.

Der Warmwasserspeicher 18 wird über die Ablaufleitung 46 ebenfalls bei Bedarf durchströmt und aufgeheizt, wobei zur Durchströmung die Pumpe 50 betätigt und entsprechende Ventile geöffnet werden.

Wird Wasser aus dem Warmwasser-Zirkulationskreislauf 44 entnommen, strömt Wasser aus dem Warmwasserspeicher 18 nach, wobei es im zweiten Wärmetauscher 26 vorerwärmt wird, bevor es über die Zulaufleitung 48 in den Warmwasser-Zirkulationskreislauf 44 eintritt und dort durch den ersten Wärmetauscher 24 weiter erwärmt wird. Der Warmwasserspeicher 18 fungiert als Spitzenlastpuffer und reduziert den Differenzdruckverlust des Warmwasser-Zirkulationskreislaufs 44 auf nahezu Null.

Muss Frischwasser in den Trinkwasserkreislauf 16 eingebracht werden, so erfolgt dies über den Frischwasseranschluss 52. Das kalte Wasser erreicht über die Zulaufleitung 48, nachdem es im zweiten Wärmetauscher 26 bereits erstmals erwärmt wurde, den Warmwasser-Zirkulationskreislauf 44.

Hat der Warmwasserspeicher 18 noch Aufnahmekapazität, so kann bewusst Frischwasser auch deshalb eingebracht werden, weil es das Wasser im Pufferspeicherkreislauf 84 abkühlt und damit am vierten Wärmetauscher 30 dafür sorgt, dass die Rücklauftemperatur im Rücklauf 14 abgesenkt wird. Somit kann über einen langen Zeitraum eine geringe Menge an kaltem Frischwasser in den Trinkwasserkreislauf 16 eingeführt werden, um die Rücklauftemperatur im Rücklauf 14 permanent niedrig zu halten.

Diesem Zweck dient auch der Pufferspeicher 20 selbst. Durch den vierten Wärmetauscher 30 wird dem Wasser des Heizwasserkreislaufs 10 zusätzliche Energie, wie gewünscht, entzogen, und diese Energie kann im Pufferspeicher 20 zwischengespeichert werden, sodass der Pufferspeicher 20 den Verlauf der Temperatur im Rücklauf 14 glättet. Dies ist insbesondere dann der Fall, wenn der Warmwasserspeicher 18 einmal am Tag durchgeheizt werden muss.

Ist kein zusätzlicher Heizbedarf für Wasser in der Zulaufleitung 48 vorhanden, so kann das Mischventil 86 entsprechend geschaltet werden, um das im Pufferspeicherkreislauf 84 umgewälzte Wasser vollständig über die Überbrückungsleitung 88 zum Pufferspeicher 20 zu lenken. Oder die Massenströme, die einerseits durch die Überbrückungsleitung 88 und andererseits durch den zweiten Wärmetauscher 26 strömen, werden sprechend angepasst und eingeregelt. Diese Regelung wird auch dann erfolgen, wenn die Temperatur des in den zweiten Wärmetauscher 26 einströmenden, vom Warmwasserspeicher 18 kommenden Wassers (zum Beispiel beim Durchheizen einmal pro Tag) höher ist als die Temperatur im Zwischenkreislauf bzw. Pufferspeicherkreislauf 84.

Zu betonen ist, dass die zuvor erwähnten Mischventile nicht zwingend für die komplette Absperrung der zu ihr führenden Leitungen verantwortlich sein müssen, vielmehr können eigene Absperrventile Leitungsstränge oder Kreisläufe gezielt absperren. Zahlreiche dieser Ventile sind in Figur 1 dargestellt.

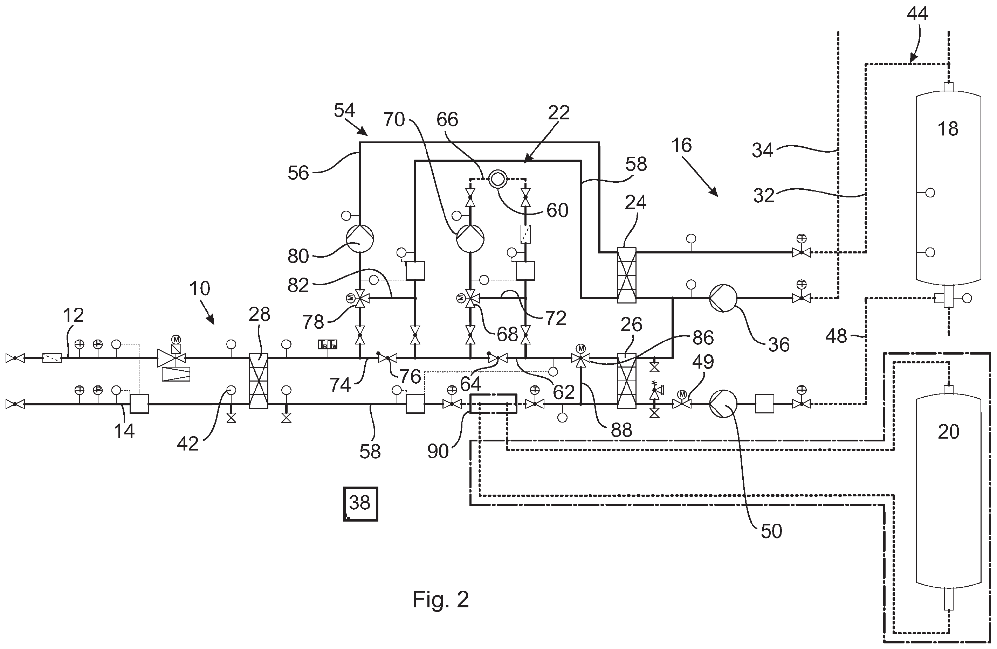

Bei der Ausführungsform nach Figur 2 werden die bereits eingeführten Bezugszahlen für gleiche oder funktionsgleiche Teile beibehalten, sodass im Folgenden nur auf die Unterschiede eingegangen wird.

Bei der Ausführungsform nach Figur 2 ist der vierte Wärmetauscher 30 nicht vorhanden, vielmehr wird die gesamte Energie aus dem Heizwasserkreislauf 10 ausschließlich über den dritten Wärmetauscher 28 dem Gebäude übergeben.

Darüber hinaus ist auch kein Zwischenkreislauf oder Pufferspeicherkreislauf 84 vorgesehen.

Dadurch, dass kein vierter Wärmetauscher vorhanden ist, kann der üblicherweise ohnehin stets bereits hausseitig verbaute singuläre würde Wärmetauscher 28 allein die Energie von der Energiequelle, hier zum Beispiel aus dem Fernwärmenetz, in das übrige System übertragen. Es muss also versorgerseitig keine Änderung am System vorgenommen werden.

Die Rücklaufleitung 58 verläuft hier stromabwärts des Gebäudeheizungskreislauf 22 zum Mischventil 86 und anschließend, je nach Stellung des Mischventils 86, zum zweiten Wärmetauscher 26 oder zur Überbrückungsleitung 88. Die Überbrückungsleitung 88 ist damit Teil der Rücklaufleitung 58.

Optional kann anschließend die Rücklaufleitung 58 zum Pufferspeicher 20 und von diesen dann zum dritten Wärmetauscher weiter verlaufen. Alternativ wird, ebenso wie bei Figur eins, das System ohne Pufferspeicher 20 ausgeführt, sodass in dem im Rechteck 90 verlaufenden Bereich eine unmittelbare Verbindung der Leitungsabschnitte erfolgt, und die Leitung zum und weg vom Pufferspeicher 20 (also der mit strichpunktierter Linie umrahmte Bereich 92) entfällt.

## Patentansprüche

1. Warmwasserbereitungsanlage mit einem Heizwasserkreislauf (10), der an eine Wärmequelle, insbesondere an ein Fernwärmesystem, anschließbar ist, und einem Trinkwasserkreislauf (16), wobei der Trinkwasserkreislauf (16) einen Warmwasser-Zirkulationskreislauf (44), einen außerhalb des Warmwasser-Zirkulationskreislaufs (44) angeordneten und mit dem Warmwasser-Zirkulationskreislauf (44) strömungsmäßig gekoppelten Warmwasserspeicher (18) und eine Wasser vom Warmwasser-Zirkulationskreislauf (44) zum Warmwasserspeicher (18) führende Ablaufleitung (46) sowie eine Wasser vom Warmwasserspeicher (18) zum Warmwasser-Zirkulationskreislauf (44) führende Zulaufleitung (48) aufweist, wobei im Warmwasser-Zirkulationskreislauf (44) ein erster Wärmetauscher (24) und in der Zulaufleitung (48) ein zweiter Wärmetauscher (26) sitzt, wobei die Wärmetauscher vom Heizwasserkreislauf (10) Wärmeenergie entnehmen können, **dadurch gekennzeichnet, dass** im Heizwasserkreislauf (10) ein dritter Wärmetauscher (28) angeordnet ist und zwischen dem dritten Wärmetauscher (28) und dem ersten Wärmetauscher (24) ein Koppelungssystem (54) mit einer Vorlaufleitung (56) und einer Rücklaufleitung (58) sitzt, über das Wärmeenergie vom dritten zum ersten Wärmetauscher (28, 24) und damit vom Heizwasserkreislauf (10) zum Trinkwasserkreislauf (16) gefördert wird, wobei ein Gebäudeheizungskreislauf (22) in Reihe mit dem ersten Wärmetauscher (24) schaltbar fluidisch einkoppelbar ist.

2. Warmwasserbereitungsanlage nach Anspruch 1, **dadurch gekennzeichnet, dass** der Gebäudeheizungskreislauf (22) in die Rücklaufleitung (58) eingebunden und Teil derselben ist.

3. Warmwasserbereitungsanlage nach Anspruch 2, **dadurch gekennzeichnet, dass** eine Bypassleitung (62) für den Gebäudeheizungskreislauf (22) vorgesehen ist, die zumindest bei Drosselung des Gebäudeheizungskreislaufs (22) durchströmt wird und die Rücklaufleitung (58) abschnittsweise bildet oder mit bildet, insbesondere dass in der Bypassleitung (62) ein Rückschlagventil (64) vorgesehen ist, welches entgegen der Strömungsrichtung von Wasser vom warmen zum kalten Abschnitt des dritten Wärmetauschers (28) geschlossen ist.

4. Warmwasserbereitungsanlage nach einem der vorhergehenden Ansprüche, **dadurch gekennzeichnet, dass** ein mit einer Steuerung (38) koppelbares Ventil (68) im Gebäudeheizungskreislauf (22) sitzt, das die durch den Gebäudeheizungskreislauf (22) geführte Energiemenge steuert und/oder wahlweise die Energiezufuhr vollständig unterbindet, insbesondere dass das Ventil (68) ein Mischventil ist, welches einen Auslass hat, welcher zu Heizkörpern (60) führt, einen ersten Zulauf, welcher vom dritten Wärmetauscher (28) ankommendes Wasser aufnimmt, und einen zweiten Zulauf, welcher vom Rücklauf des Gebäudeheizungskreislaufs (22) Wasser aufnimmt.

5. Warmwasserbereitungsanlage nach einem der vorhergehenden Ansprüche, **dadurch gekennzeichnet, dass** zwischen der Vorlaufleitung (56) und der Rücklaufleitung (58) eine Kurzschlussleitung (74) vorgesehen ist, über die Wasser zum Gebäudeheizungskreislauf (22) strömen kann, ohne den ersten Wärmetauscher (24) zu erreichen, insbesondere dass in der Kurzschlussleitung (74) ein Rückschlagventil (76) vorgesehen ist, welches entgegen der Strömungsrichtung von Wasser vom warmen zum kalten Abschnitt des dritten Wärmetauschers (28) geschlossen ist.

6. Warmwasserbereitungsanlage nach Anspruch 5, **dadurch gekennzeichnet, dass** ein mit einer Steuerung (38) koppelbares Ventil (78) in der Vorlaufleitung (56) sitzt, das die durch die Vorlaufleitung (56) geführte Energiemenge steuert und/oder die Energiezufuhr wahlweise vollständig unterbindet, insbesondere dass das Ventil (78) ein Mischventil ist, welches einen Auslass hat, welcher zum ersten Wärmetauscher (24) führt, einen ersten Zulauf, welcher vom dritten Wärmetauscher (28) ankommendes Wasser aufnimmt, und einen zweiten Zulauf, welcher unmittelbar mit der Rücklaufleitung (58) gekoppelt ist.

7. Warmwasserbereitungsanlage nach einem der vorhergehenden Ansprüche, **dadurch gekennzeichnet, dass** eine über ein Ventil (86) zuschaltbare Überbrückungsleitung (88) Wasser am zweiten Wärmetauscher (26) vorbeiführt, insbesondere wobei das Ventil (86) ein Mischventil ist, mittels dessen der durch den zweiten Wärmetauscher (26) und die Überbrückungsleitung (88) geführte Wasserdurchfluss steuerbar ist.

8. Warmwasserbereitungsanlage nach Anspruch 7, **dadurch gekennzeichnet, dass** die Überbrückungsleitung (88) Teil der Rücklaufleitung (58) stromabwärts des Gebäudeheizungskreislaufs (22) ist, die zu dem dritten Wärmetauscher (28) führt, wobei ein zur Überbrückungsleitung (88) paralleler Strang der Rücklaufleitung (58) durch den zweiten Wärmetauscher (26) führt.

9. Warmwasserbereitungsanlage nach Anspruch 7 oder 8, **dadurch gekennzeichnet, dass** in die Rücklaufleitung (58) stromabwärts der Überbrückungsleitung (88) und des zweiten Wärmetausches (26) ein Pufferspeicher (20) eingebettet ist.

10. Warmwasserbereitungsanlage nach einem der Ansprüche 7 bis 9, **dadurch gekennzeichnet, dass** ein vierter Wärmetauscher (30) vorgesehen ist, welcher in den Heizwasserkreislauf (10) stromabwärts des dritten Wärmetauschers (28) eingekoppelt ist, wobei ein Zusatzkreislauf den zweiten und den vierten Wärmetauscher (26, 30) miteinander thermisch koppelt, insbesondere dass der Zusatzkreislauf fluidisch von den den ersten und den dritten Wärmetauscher (24, 28) koppelnden Leitungen getrennt ist, vorzugsweise dass der Zusatzkreislauf ein Pufferspeicherkreislauf (84) mit einem in den Pufferspeicherkreislauf (84) eingebetteten Pufferspeicher (20) ist.

11. Warmwasserbereitungsanlage nach einem der vorhergehenden Ansprüche, **dadurch gekennzeichnet, dass** ein Temperatursensor (42) vorgesehen ist, zur Bestimmung der Rücklauftemperatur des Heizwasserkreislaufs (10), wobei eine mit dem Temperatursensor (42) gekoppelte Steuerung (38) so programmiert ist, dass die Energiemenge in der Zulaufleitung (48) und/oder, sofern auf einen der Anspruch 10 rückbezogen, im Zusatzkreislauf in Abhängigkeit von der ermittelten Rücklauftemperatur gesteuert wird.

12. Verfahren zum Betreiben einer Warmwasserbereitungsanlage mit einem Heizwasserkreislauf (10), der an eine Wärmequelle, insbesondere ein Fernwärmesystem, anschließbar ist, und einem Trinkwasserkreislauf (16), wobei der Trinkwasserkreislauf (16) einen Warmwasser-Zirkulationskreislauf (44), einen außerhalb des Warmwasser-Zirkulationskreislaufs (44) angeordneten und mit dem Warmwasser-Zirkulationskreislauf (44) strömungsmäßig gekoppelten Warmwasserspeicher (18) und eine Wasser vom Warmwasser-Zirkulationskreislauf (44) zum Warmwasserspeicher (18) führende Ablaufleitung (46) sowie eine Wasser vom Warmwasserspeicher (18) zum Warmwasser-Zirkulationskreislauf (44) führende Zulaufleitung (48) aufweist, wobei im Warmwasser-Zirkulationskreislauf (44) ein erster Wärmetauscher (24) und in der Ablaufleitung (46) ein zweiter Wärmetauscher (26) sitzt, wobei die Wärmetauscher vom Heizwasserkreislauf (10) Wärmeenergie entnehmen können, wobei im Heizwasserkreislauf (10) ein dritter Wärmetauscher (28) angeordnet ist und zwischen dem dritten Wärmetauscher (28) und dem ersten Wärmetauscher (24) ein Koppelungssystem (54) mit einer Vorlaufleitung (56) und einer Rücklaufleitung (58) sitzt, und mit einem Gebäudeheizungskreislauf (22), der in die Warmwasserbereitungsanlage eingebunden ist, **gekennzeichnet durch** folgende Schritte:
Wärme aus dem Heizwasserkreislauf (10) wird am dritten Wärmetauscher (28) in das Kopplungssystem (54) eingebracht und von dem Kopplungssystem (54) am ersten Wärmetauscher (24) in den Trinkwasserkreislauf (16) eingebracht, und
bei Heizungsbedarf wird der Gebäudeheizungskreislauf (22) zugeschaltet und ist dann in Reihe mit dem ersten Wärmetauscher (24) geschaltet.

13. Verfahren nach Anspruch 12, **dadurch gekennzeichnet,**
**dass** abhängig vom Heizungsbedarf und/oder vom Energiebedarf im Trinkwasserkreislauf (16) der Wasserdurchfluss zum ersten Wärmetauscher (24) im Kopplungssystem (54) und der Wasserdurchfluss zum Gebäudeheizungskreislauf (22) verändert werden, wobei das Verfahren auch ein optionales Absperren des Durchflusses durch den ersten Wärmetauscher (24) umfasst, und/oder
**dass** abhängig vom im Gebäudeheizungskreislauf (22) erforderlichen Energiemenge die Energiemenge durch den ersten Wärmetauscher (24) gesteuert oder geregelt wird und gegebenenfalls das Verhältnis der durch den ersten Wärmetauscher (24) strömenden Energiemenge zu der Energiemenge des am ersten Wärmetauscher (24) vorbei unmittelbar in den Gebäudeheizungskreislauf (22) führenden Wassers verändert wird.

14. Verfahren nach Anspruch 12 oder 13, **dadurch gekennzeichnet,**
**dass** der Wärmefluss vom dritten Wärmetauscher (28) zuerst zum ersten Wärmetauscher (24) erfolgt und, bei Energiebedarf im Gebäudeheizungskreislauf (22), anschließend zum Gebäudeheizungskreislauf (22) und schließlich zurück zum dritten Wärmetauscher (28) führt und/oder dass zum zusätzlichen Abkühlen des Wassers im Rücklauf (14) des Heizwasserkreislaufs (10) kaltes Wasser aus dem Warmwasserspeicher (18) oder kaltes Frischwasser über die Zulaufleitung (48) dem zweiten Wärmetauscher (26) zugeführt wird, wobei das zusätzliche Abkühlen abhängig von der Rücklauftemperatur des Heizwasserkreislaufs (10) gesteuert oder geregelt wird, und/oder
**dass** ein Zusatzkreislauf, mit einem darin integrierten vierten Wärmetauscher (30), der stromabwärts des dritten Wärmetauschers (28) im Heizwasserkreislauf (10) sitzt, zugeschaltet wird, um Wärme vom vierten Wärmetauscher (30) zum zweiten Wärmetauscher (26) und stromabwärts des zweiten Wärmetauschers (26) durch den Pufferspeicher (20) zu führen, insbesondere wobei ein Pufferspeicher (20) in den Zusatzkreislauf integriert ist, wobei optional der Wasserdurchfluss, der im Zusatzkreislauf zum zweiten Wärmetauscher (26) strömt, variabel gesteuert oder geregelt wird und an dem zweiten Wärmetauscher (26) auch vorbei geleitet werden kann.

15. Verfahren nach einem der Ansprüche 12 bis 14, **dadurch gekennzeichnet, dass** durch den ersten Wärmetauscher (24) und den Gebäudeheizungskreislauf (22) abgekühltes Wasser anschließend durch den zweiten Wärmetauscher (26) und/oder parallel zum zweiten Wärmetauscher (26) zum dritten Wärmetauscher (30) geführt wird, insbesondere unter Zwischenschaltung eines Pufferspeichers (20), der stromabwärts des zweiten Wärmetauschers (26) in die Rücklaufleitung (58) eingebettet ist, wobei zumindest ein Teil des Wassers durch Vorsehen eines steuerbaren Ventils (86) in eine Überbrückungsleitung (88) geleitet wird, um den zweiten Wärmetauscher (26) zu umgehen.
